# EUROPEAN PATENT SPECIFICATION

(11) **EP 1 475 610 B1**
(45) Date of publication and mention of the grant of the patent: **04.02.2009**
(21) Application number: 03009754.7
(22) Date of filing: 06.05.2003
(51) Int. Cl.: G01C 21/34, G01C 21/36, B60R 25/04, B60R 16/02, H04L 29/06, H04L 29/08

(54) **Remote vehicle control**
Fernsteuerung für Fahrzeug
Commande à distance pour véhicule

(43) Date of publication of application: 10.11.2004
(73) Proprietor: Harman Becker Automotive Systems GmbH, 76307 Karlsbad (DE)
(72) Inventor: Behrens, Ralph, 31174 Schellerten (DE); Wietzke, Joachim, 76228 Karlsruhe (DE)
(74) Representative: Bertsch, Florian Oliver

(56) References cited:
- EP-A- 1 063 494
- WO-A-00/74019
- WO-A-02/37446
- US-A1- 2001 025 222
- US-A1- 2002 013 660
- US-A1- 2002 164 973
- US-A1- 2003 023 371
- US-B1- 6 330 499
- KENNEDY P: "MobileWebchanging the face of mobile networking through universal wireless connectivity" , NORTHCON/96 SEATTLE, WA, USA 4-6 NOV. 1996, NEW YORK, NY, USA,IEEE, US, PAGE(S) 89-94 XP010203044 ISBN: 0-7803-3277-6 * the whole document *

## Description

The present invention relates to a method for remote-controlling a vehicle and also to a system for remote-controlling a vehicle, the system comprising a data transmitting/ receiving unit and a processing unit mounted in the vehicle. The invention further relates to the use of a data transmitting/ receiving unit for remote-controlling a vehicle by using a wireless communication, and relates to the use of a processing unit mounted in a vehicle. More particularly, the invention relates to a method for remote-controlling a vehicle by using a mobile data transmitting/receiving unit as, e.g., a cellular phone, or a Personal Digital Assistant PDA.

In the prior art, for repairing a defect vehicle, test units are known which can be connected to a processing unit in the vehicle. Certain tests are carried out in order to find the reason, why the vehicle does not work properly. Normally, these test units comprise handhelds for controlling the test unit. These handhelds can be connected directly to the test unit by cables, or can be connected to the test unit by wireless communication.

In this case, however, all the programs needed for testing the vehicle are encorporated in the test unit, so that these test units are highly sophisticated machines which contain all the software and hardware needed to carry out different tests.

US-A-6 154 685 relates to a vehicle information and safety system including a main computer at vehicle fleet headquarters with access over a data network to a computerized sensor system mounted in each vehicle of the fleet. The sensor data are sent to the vehicle fleet headquarters where an operator can optimize the vehicle fleet by using the sent data. In this case, again, all the software and hardware needed for carrying out the control are installed within a highly sophisticated computer system in the vehicle-fleet headquarters. In conclusion, highly sophisticated control units comprising all the necessary hardware and software are necessary in order to control a vehicle-fleet. In the first mentioned example all the software and hardware are also installed in the test unit for controlling the test of the vehicle.

This means that certain applications for controlling a vehicle can only be carried out at specific locations where the main computer or the test unit is installed. It is therefore only possible to control the vehicle at locations next to the vehicle where normally the control unit is present. Normally, the remote control of a vehicle is hardly possible or only possible under the condition that a wireless communication between the sophisticated remote-control unit and the vehicle is possible.

US 2003/0023371 A1 discloses, according to the preamble of claim 1, a navigation device receiving a destination identifier via transmission from a PDA or a cellular phone. The destination identifier is used as a destination for the navigation device so that the need for entering the address information manually can be eliminated.

EP 1 063 494 A1 discloses a portable terminal connected to an on-vehicle information device when the former is placed on a cradle.

WO 00/74019 A1 discloses a system in which a PDA or cell phone is brought to a vehicle and data from the PDA is transferred to the vehicle.

It is therefore an object of the present invention to make possible a remote control of a vehicle using a simple, not highly sophisticated apparatus.

This object is achieved by a method according to claim 1. Preferred embodiments are described in the dependent claims 2 to 14. The object is also achieved by a system for remote-controlling a vehicle as described in claim 15, the dependent claims 16 to 19 describing preferred embodiments of the system.

The invention overcomes the above-mentioned problems as well as other shortcomings and deficiencies of existing technologies by providing a method for remote-controlling a vehicle, the method comprising the following steps:
first of all a data transmitting/receiving unit is connected to a vehicle by using wireless communication. Subsequently, a command is transmitted to a processing unit disposed in the vehicle via the data transmitting/receiving unit. This command is then processed by the processing unit disposed in the vehicle. Thereafter, the processed command is transmitted to the data transmitting/receiving unit via the processing unit, and the user of the data transmitting/receiving unit is informed of the processed command via the data transmitting/ receiving unit. According to an important aspect of the invention the data transmitting/receiving unit uses the processing unit installed in the vehicle for processing the transmitted command. In the present invention the term "command" is used in a broad sense. The processing step can mean that, program files containing different algorithms are provided if the command transmitted to the processing unit was an order to provide this specific program file to be executed on the data transmitting/receiving unit. According to the present invention it is possible to use a very simple data transmitting/receiving unit in order to remote-control a vehicle. The data transmitting/ receiving unit uses the facilities and capabilities of devices already present in nowadays cars. At present, cars are equipped with many electronic features and many electronic devices, so that computers with powerful hardware components are installed in vehicles to control the function of the vehicle. According to the invention, this computer or processing unit in the car is used as a server for providing different applications to a remote user. As the data transmitting/receiving unit uses the software and hardware components installed in the vehicle, a highly sophisticated data transmitting/receiving unit containing all the applications needed to control the car is not necessary. However, it should be understood that the data transmitting/ receiving unit is still capable of communicating with the vehicle remotely, informing the user of the processed command, etc. These "non-intelligent" data transmitting/receiving units are widespread and can, e.g., be cellular phones or Personal Digital Assistants PDA. In conclusion, many applications of a remote-controlled vehicle can be controlled by using a simple data transmitting/receiving unit which uses the processing unit of the car as a server which provides the necessary features for the control of the vehicle.

According to one aspect of the present invention the connection between the remote-controlled vehicle and the data transmitting/ receiving unit is set up by using infrared, bluetooth, wireless Lan, GSM, GPRS and/ or UMTS. It is obvious that the technology for setting up the wireless communication between the data/ transmitting unit and the car is selected according to the demands for each application. Furthermore, it is obvious that the different units can communicate with each other by using the respective communication technologies.

According to one embodiment of the present invention, the user of the data transmitting/ receiving unit inputs the command into the data transmitting/ receiving unit prior to its transmission to the processing unit in the vehicle. This means that the user of the data transmitting/receiving unit can choose the desired command, i.e., the application by which the user wants to control the vehicle.

According to one embodiment of the present invention an authorization step is carried out prior to the transmission of the command to the processing unit by the data transmitting/ receiving unit. The user of the data transmitting/receiving unit has to be authorized to control different features of the vehicle. In one embodiment of the present invention the authorization step is initiated by the processing unit in the vehicle controlled by the user. This means that the user of the vehicle allows that a third person in a remote location can have access to the processing unit or computer system of the vehicle and its applications.

In another embodiment of the present invention this authorization step is initiated by the data transmitting/ receiving unit controlled by the user of the data transmitting/ receiving unit. In this case either the vehicle is abandoned, so that nobody can give the authorization in the vehicle or the person in the vehicle is not authorized to enable the transmission of data.

According to the invention the data transmitting/ receiving unit may be connected to a remote data transmitting server of the processing unit. The server provides all the applications, documents or data needed which will be transmitted to the data transmitting/receiving unit.

According to the invention, the command transmitted to the processing unit comprises the command to provide a program file to be executed on the data transmitting/ receiving unit, and the processing step comprises the step of providing a program file. The step of transmitting the processed command comprises the step of transmitting the provided program file to the data transmitting/ receiving unit, and the information step comprises the step of informing the user that the transmitted program to be executed on the data transmitting/ receiving unit is available on the data transmitting/receiving unit. The user of the data transmitting/ receiving unit can now run the transmitted program file on the data transmitting/ receiving unit. It should be understood that the connection between the data transmitting/ receiving unit and the processing unit are maintained while the program file runs on the data transmitting/ receiving unit.

According to another aspect of the present invention, the processing of the command comprises the step of starting the head unit of the vehicle. The head unit of the vehicle is normally the unit comprising the processing unit of the vehicle and other electronic devices such as, e.g., a navigation system using the GPS and/or a radio/CD player. It is therefore possible to start any application which controls the vehicle, even if the vehicle engine is not running.

According to the invention, the processing step can comprise the execution of a diagnosis program for finding errors in the operation of the vehicle. This could be of help if the vehicle does not function properly and the user of the vehicle wants to know the reason. In this case a remote garage can start the program that will find the error in the operation of the vehicle.

According to another embodiment of the present invention, during the processing of the command, an anti-theft program can be executed, this program comprising the steps of: cutting off the engine of the vehicle, activating the horn of the vehicle, recording the position data of the vehicle by using a GPS system of the vehicle, activating the warning flash of the vehicle, and/or activating a camera installed in the vehicle and taking pictures of the passenger compartment of the vehicle. In this case the user of a vehicle is able to control different functions of the vehicle in a very efficient way as well as to prevent the car from being stolen.

According to the another embodiment of the present invention the command is not directly transmitted from the data transmitting/receiving unit to the processing unit in the vehicle, but is transmitted to an internet server which will provide the connection with the server in the vehicle. In this case, the command is transmitted to the processing unit in the vehicle by means of a TCP/IP protocol.

The present invention also relates to a system for remote-controlling a vehicle, comprising a data transmitting/ receiving unit and a processing unit mounted in the vehicle, the system working according to the method as described above. According to the invention, the processing unit in the vehicle comprises a server which includes the program files. Furthermore, the data transmitting/ receiving unit and the processing unit comprise an input unit, a display unit and/or a GPS receiver, so that different applications can be started from both units, and the applications can be monitored on the display units of each unit. The vehicle can further comprise a camera installed in the vehicle and a control unit for controlling the processing of the command, and/or a memory for storing different applications.

Other objects, features and advantages of the present invention will become apparent in the course of the following description referring to the accompanying drawings.
Fig. 1A shows a schematic view of a system according to the present invention,
Fig. 1B shows a processing unit comprised in the vehicle,
Fig. 2 shows a flow chart for remote-controlling a vehicle by using a method according to the present invention,
Fig. 3 shows a further flow chart for controlling a remote-controlled vehicle by using a method according to the present invention,
Figures 4 to 7 show embodiments net forming part of the invention.

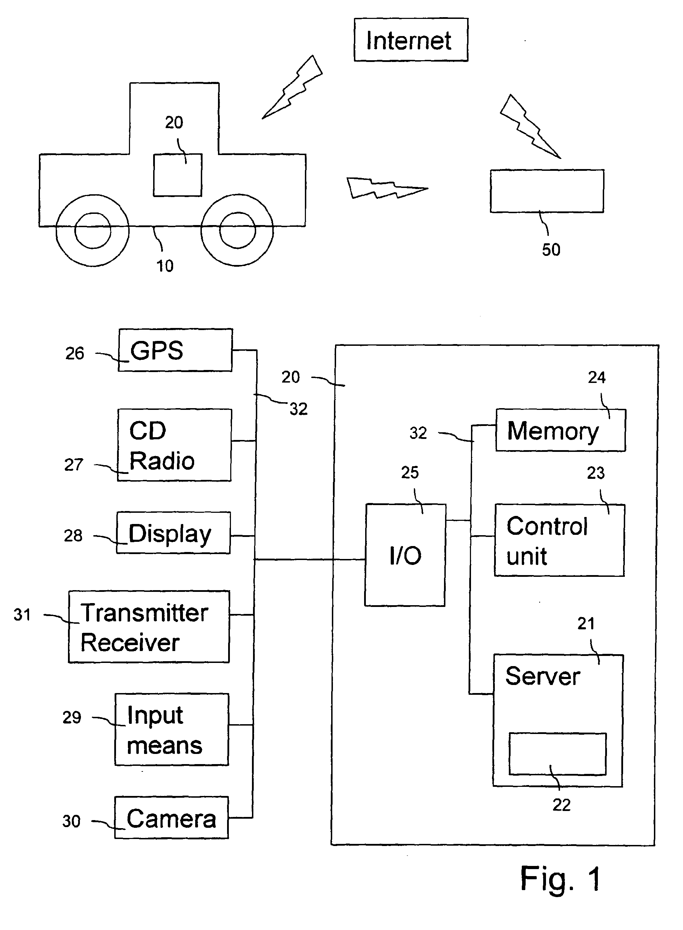

Fig. 1A shows a vehicle 10 comprising a processing unit 20. A data transmitting/ receiving unit 50 is connected to the vehicle 10 by using wireless communication. The connection between the vehicle 10 and the remote data transmitting/receiving unit 50 can be obtained directly using infrared, bluetooth, wireless LAN. The connection between the vehicle and the data transmitting/ receiving unit could also be achieved by using an internet service provider, so that the connection is obtained by using a TCP/ IP protocol. Furthermore, cellular phone connection techniques as GSM, GPRS and UMTS could be used. It should be understood that any wireless communication technique could be used.

As shown in Fig. 1B the processing unit 20 comprises a server 21 which contains all the data, program files, or applications for controlling the vehicle 10 by using the data transmitting/ receiving unit 50. Server 21 comprises a remote data transmitting server 22 which provides all information to be transmitted to the data transmitting/receiving unit 50 or received from the latter. The processing unit 20 further comprises a control unit 23 for controlling the processing unit, and a memory 24 which can contain any information which the user of the car or the user of the data transmitting/ receiving unit wants to save. The memory could, e.g., contain a password which is needed to access the processing unit 20. The processing unit 20 further comprises an input/output means 25 for receiving information from other devices that could be installed in the vehicle 10, e.g., a GPS system 26, a CD or radio player 27, a display 28, an input means 29 for inputting a command, and/or a camera 30. Furthermore, a transmitter/receiver 31 builds up the connection to the data transmitting/receiving unit 50. The data transmitting/receiving unit 50 could be a cellular phone or a personal digital assistant PDA. These devices are widely used in the public, so that they are cheap and available all over the world. It should be understood that data transmitting/ receiving unit 50 may also comprise a GPS system (not shown), a display, a transmitter/receiver, an input means, and/or a camera. These devices can be used as mobile units, so that, at every location, a remote user can send data to the vehicle and, therefore, control the vehicle. All these units communicate with each other by using a bus system 32.

Nevertheless, the data transmitting/receiving unit 50 can also be part of a non-mobile computer system as will be described later in relation to one embodiment of the present invention, the data transmitting/ receiving being a part of a computer system of a car rental company.

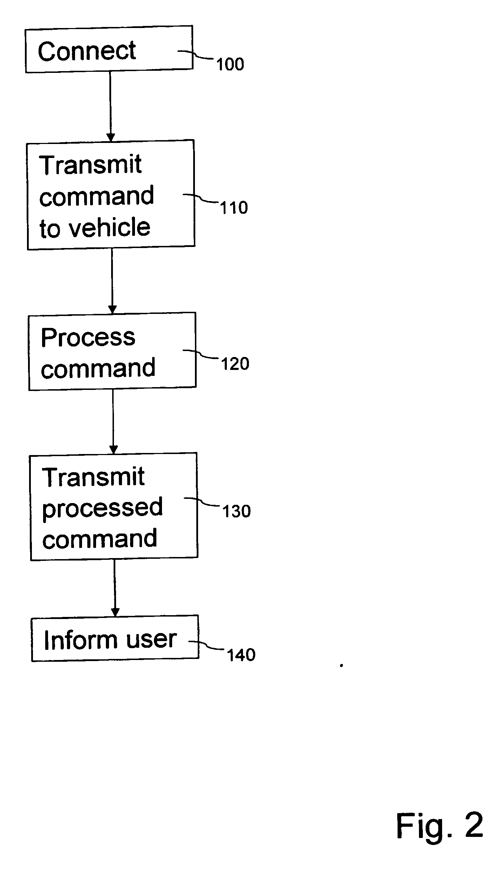

In Fig. 2 a flow chart showing the main steps for remote-controlling a vehicle is shown. In a first step 100 the data transmitting/receiving unit 50 is connected to the vehicle 10 by using any kind of wireless communication technology. In a second step 110 a command is sent from the data transmitting/receiving unit 50 to the processing unit 20 of the vehicle 10. The user of the data transmitting/receiving unit 50 could input this command into the data transmitting/ receiving unit by using an input means (not shown) or could select a predetermined command chosen among others. Before step 110 a not shown authorization step can be carried out, before the user of the data transmitting/ receiving unit 50 can access the processing unit 20 in the vehicle. During this authorization step either the user of the data transmitting/ receiving unit 50 can input a predetermined password in order to be able to enter the system, or the user of the vehicle can input the predetermined password in order to authorize any third person to have access to the processing unit 20.

After the command has been transmitted to the vehicle in step 110, the command is processed by the processing unit 20 disposed in the vehicle 10 (step 120). In step 130 the processed command is transmitted from the processing unit to the data transmitting/ receiving unit, in step 140 the user of the data transmitting/receiving unit being informed of the processed command.

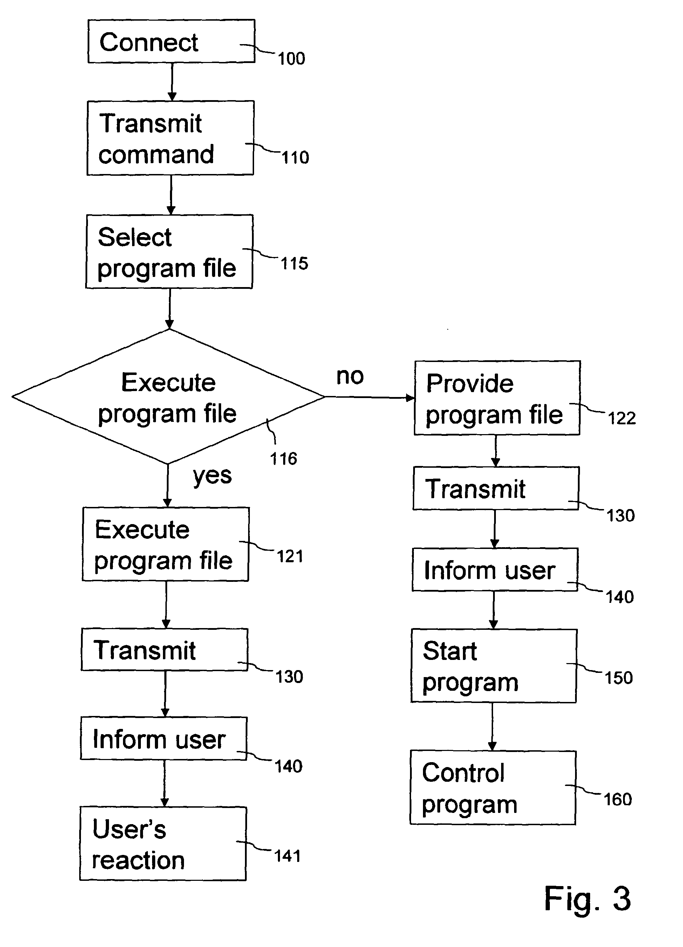

In Fig. 3 processing steps that were already mentioned above are not explained in detail any more.

As can be seen in Fig. 3 the command transmitted to the processing unit 50 in step 130 could contain the information to select a certain program file available on the server 21 (step 115). This program file can contain any kind of algorithm for controlling any device within the car. In step 116 it has to be decided whether the program file is to be executed in the processing unit 20 of the vehicle 10 or if it is to be transmitted to the remote data transmitting/ receiving unit 50. If the program file runs on the processing unit 20 of the vehicle, the command is processed in the vehicle and executed (step 121). This is not an embodiment of the present invention. In step 130 the processed command is transmitted to the data transmitting/ receiving unit. In this case this means that the result of the executed program file is sent to the user of the data transmitting/receiving unit, the result being either the information that the program has been executed on the vehicle or the result being data obtained during the execution of the program file. In step 140 the user is informed, e.g. by a display unit of the data transmitting/receiving unit on the basis of the result of the processed command. The user can react on the displayed information, e.g., by deciding to transmit another command to the processing unit of the vehicle (step 141).

If according to the invention, the program is not executed in the processing unit 20 of the vehicle 10, the step of processing the command by the processing unit in the vehicle comprises the step of providing the program file which has been selected by the user of the data transmitting receiving unit 50 (step 122). The selected program file is then transmitted to the data transmitting/ receiving unit 50 (step 130) which informs the user that the selected program file is available (step 140). The program file can then be started on the data transmitting/receiving unit 50 (step 150). In step 160 the program running on the data transmitting/ receiving unit can be controlled by its user.

It is obvious that the requirements that have to be met by the data transmitting/ receiving unit are higher if the program file is to be executed on the data transmitting/ receiving unit itself. The requirements for hardware and software components are easier to meet, if the program is executed on the processing unit in the vehicle itself and only the result is transmitted as shown in the left column of Fig. 3.

However, in both cases a relatively simple data transmitting/receiving unit can be used for remote-controlling a vehicle, as all necessary data are comprised on the server 21 of the processing unit 20. In both cases shown, the vehicle can be controlled by using a simple and cheap data transmitting/receiving unit like, e.g., a mobile phone or a PDA.

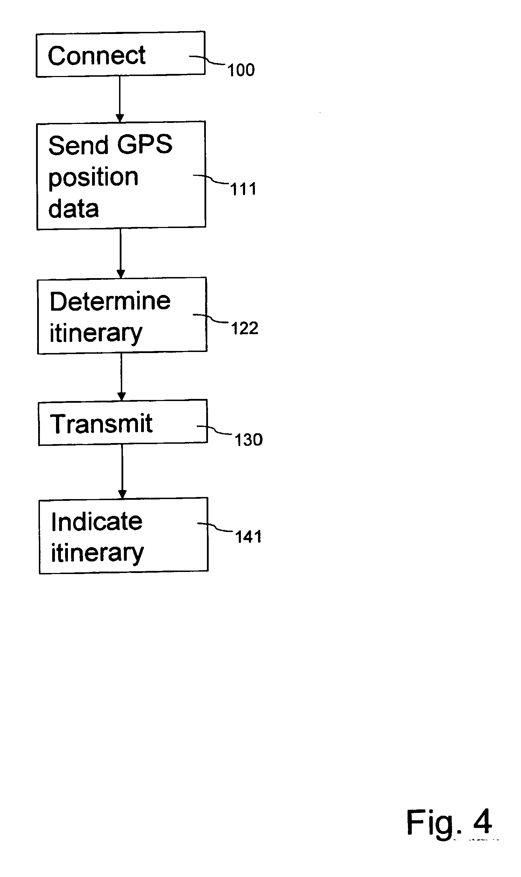

In the embodiment shown in Fig. 4 not forming part of the invention the server 21 of the processing unit 20 is used to guide the user of the vehicle when he or she leaves the car and moves on by foot. After the connection of the data transmitting/receiving unit - which, in this case, comprises a GPS receiver - to the vehicle (step 100), the received GPS data containing the position data of the user of the data transmitting/ receiving unit 50 are transmitted to the processing unit in the vehicle (step 111). During the processing step 122 the processing unit determines the intinerary to a predetermined location on the basis of the received GPS data. The processing unit transmits the determined itinerary to the data transmitting/ receiving unit 50 (step 130). The data transmitting/receiving unit 50 informs the user about the direction to follow in order to arrive at the predetermined location (step 141). According to this embodiment, the mobile data transmitting/ receiving unit 50 comprising the GPS unit can use all the information, be it maps or additional information to the map, stored on the server 21 of the processing unit. The data transmitting/receiving unit 50 does not have to comprise all the necessary information, but it can rely on the GPS system already installed in the vehicle.

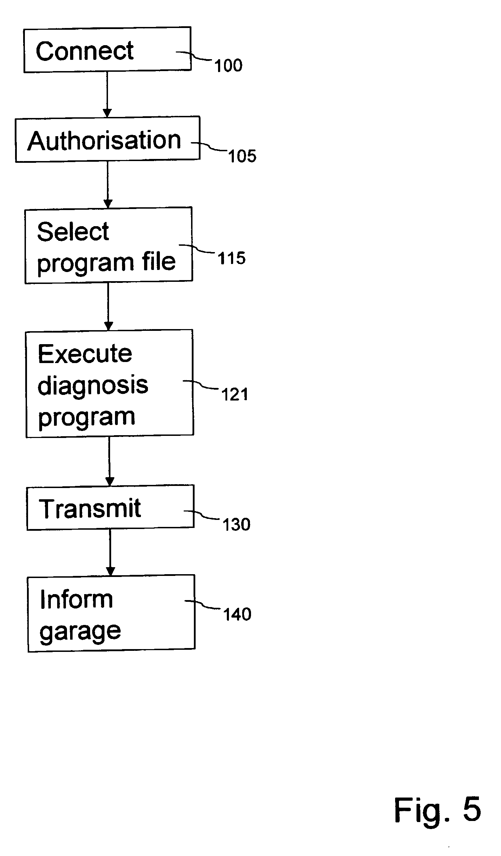

In Fig. 5 an embodiment not forming part of the invention is shown. In this application the vehicle with its server can be of help to find an error if the vehicle is not working properly. After building up the connection between the vehicle and the data transmitting/receiving unit (step 100), the authorization is given in step 105 to enter the processing unit of the vehicle. In this case the authorization step is initiated by the processing unit in the vehicle controlled by the user. The user of the vehicle permits a third person, e.g. a worker in a garage, to access the processing unit in order to check why the vehicle is not working. In step 115 the program file containing the diagnosis feature is selected from the data transmitting/receiving unit. In step 121 the program file is executed, the result is transmitted in step 130 and the garage is informed. Depending on the result of the diagnosis program, the garage can advise the user of the car what to do or can send a breakdown lorry or already order the parts of the vehicle, which are needed to repair it (step 140) .

In the embodiment shown in Fig. 5 the program is executed in the processing unit of the vehicle, as also shown in the left column of Fig. 3. Of course, the program can also be sent to the data transmitting/receiving unit and can be executed there as shown in the right column of Fig. 3. In this embodiment the data transmitting/ receiving unit need not be a mobile device, e.g., a mobile phone. The data transmitting/receiving unit 50 could also be part of a computer system installed at the garage which is responsible for repairing the vehicle.

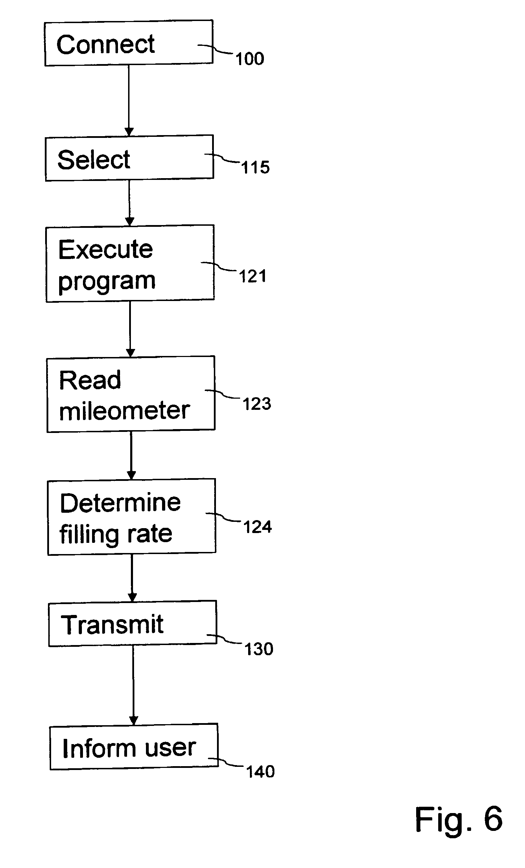

Fig. 6 shows an application not forming part of the present invention. This application could, e.g., be of help for a car rental company or the like. Processing steps that were already mentioned above are not explained in detail any more. The car rental company could use their data transmitting/ receiving unit for starting a diagnosis program when one car of the fleet is returned to its basis. Therefore, the program file for recording the status of the vehicle is selected in step 115 via the data transmitting/receiving unit. Then, the program file is executed in step 121. During this program the mileometer is read in step 123 and the filling rate of the fuel tank is determined in step 124. Obviously any other kind of information could be recorded for determining the status of the vehicle. This information can then be transmitted to a data transmitting/ receiving unit (step 130) and the car rental company can be informed how many kilometers the vehicle has made. In conclusion, the present invention provides a very cost-effective way for determining the status of the vehicle, since a person recording all these data is not necessary any more.

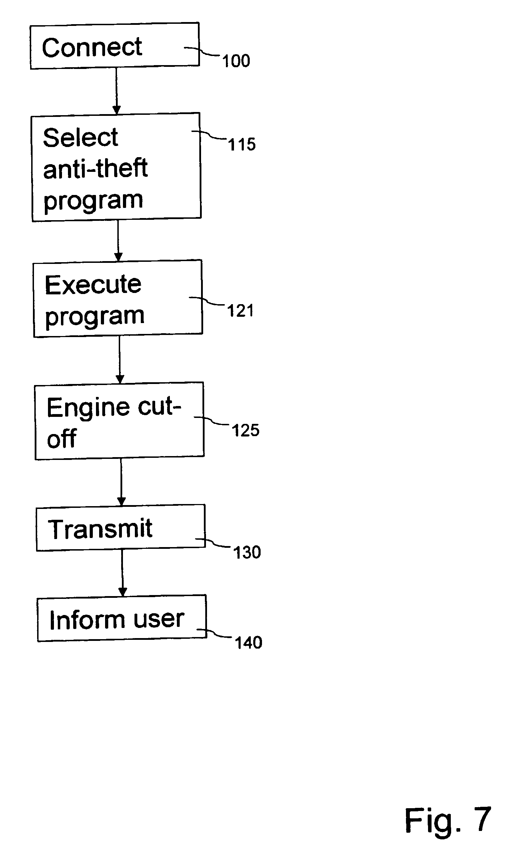

In Fig. 7 another embodiment not forming part of the invention for remote-controlling a vehicle is shown. The present embodiment could be used, if the vehicle has been stolen. If, e.g., the owner of a vehicle notices that his or her vehicle has been stolen, he/she can build up a connection to the remote vehicle using the data transmitting/receiving unit (step 100). In the next step an anti-theft program is selected (step 115). It should be understood that in this case the user of the vehicle is not informed of what is going on in the processing unit. In step 121 the program is executed. During this processing of the command for executing the program, the engine of the vehicle can be cut off, the horn of the vehicle can be activated, the position data of the vehicle by using a GPS system of the vehicle can be recorded, the warning flash of the vehicle can be activated, and/or a camera installed in the vehicle and taking pictures of the passenger compartment of the vehicle can be activated (step 125). Using this method the owner of the vehicle knows where the vehicle is when the executed command contains the position data of the vehicle (step 130), and the owner is informed (step 140).

In conclusion, all the above described embodiments allow an easy and effective way of remote-controlling a vehicle by using a simple data transmitting/receiving unit which uses the server of the vehicle. According to the invention the data transmitting/ receiving unit can be kept simple and a whole new variety of applications are possible.

## Claims

1. Method for remote-controlling a vehicle (10) comprising the following steps:
- connecting a data transmitting/ receiving unit (50) with a remote vehicle (10) by using wireless communication,
- transmitting a command to a processing unit (20) disposed in the vehicle (10) via the data transmitting/receiving unit (50),
- processing the command by the processing unit (20) disposed in the vehicle (10),
- transmitting the processed command to the data transmitting/ receiving unit (50) via the processing unit, and
- informing the user of the data transmitting/receiving unit (50) of processed command via the data transmitting/receiving unit,
**characterized in that**
- the command transmitted to the processing unit (20) comprises the command to provide a program file contained on a server (21) provided in the vehicle to be executed on the data transmitting/receiving unit (50),
- the processing step comprises the step of providing the program file,
- the step of transmitting the processed command comprises the step of transmitting the provided program file to the data transmitting/receiving unit (50), and
- the information step comprises the step of informing the user that the transmitted program to be executed on the data transmitting/receiving unit (50) is available on the data transmitting/ receiving unit.

2. Method according to claim 1, **characterized in that** the connection between the remote vehicle (10) and the data transmitting/receiving unit (50) is set up by infrared, Bluetooth, wireless LAN, GSM, GPRS and/or UMTS.

3. Method according to any one of the preceding claims, **characterized in that** a user of the data transmitting/receiving unit (50) inputs the command into the data transmitting/ receiving unit prior to its transmission to the processing unit (20).

4. Method according to any one of the preceding claims, **characterized in that** an authorization step is carried out prior to the transmission of the command to the processing unit (20) by the data transmitting/receiving unit (50).

5. Method according to claim 4, **characterized in that** the authorization step is initiated by the processing unit (20) in the vehicle (10) controlled by the user of the vehicle.

6. Method according to claim 4, **characterized in that** the authorization step is initiated by the data transmitting/receiving unit (50) controlled by the user of the data transmitting/ receiving unit.

7. Method according to any one of the preceding claims, **characterized in that** the data transmitting/receiving unit (50) is connected to a remote data transmitting server (22) of the processing unit (20).

8. Method according to any one of the preceding claims, **characterized in that** the processing of the command comprises the step of starting the head unit of the vehicle.

9. Method according to any one of the preceding claims, **characterized in that** the processing step comprises the execution of a diagnosis program for finding errors in the operation of the vehicle.

10. Method according to any one of the preceding claims, **characterized in that**, during the processing of the command, an anti-theft program is executed, comprising the steps of
- cutting off the engine of the vehicle,
- activating the horn of the vehicle,
- recording the position data of the vehicle by using a GPS system of the vehicle,
- activating the warning flash of the vehicle, and/or
- activating a camera (30) installed in the vehicle (10) and taking pictures of the passenger compartment of the vehicle.

11. Method according to any one of the preceding claims, **characterized in that** the result of the processed command is transmitted to a mobile data transmitting/receiving unit like a cellular phone or a Personal Digital Assistant PDA.

12. Method according to any one of claims 1 to 10, **characterized in that** the result of the processed command is transmitted to a non-mobile computer system.

13. Method according to any one of the preceding claims, **characterized in that** the user of the data transmitting/receiving unit (50) chooses the program files to be executed, which are stored in the processing unit (20) of the vehicle by means of an input unit of the data transmitting/ receiving unit.

14. Method according to any one of the preceding claims, **characterized in that** the command is transmitted to the processing unit in the vehicle by means of a TCP/ IP protocol.

15. System for remote-controlling a vehicle (10), comprising
- a data transmitting/receiving unit (50) connected to a remote vehicle by wireless communication,
- a processing unit (20) mounted in the vehicle,
wherein the data transmitting/receiving unit (50) transmits a command to the processing unit in the vehicle, the processing unit (20) processing the command and transmitting the processed command to the data transmitting/receiving unit that informs the user of the data transmitting/receiving unit (50) of the processed command,
**characterized in that**
a server (21) is provided in the vehicle providing a program file to be executed on the data transmitting/receiving unit (50), wherein the provided program file is transmitted to the data transmitting/receiving unit, wherein the data transmitting/receiving unit comprises a display informing the user that the transmitted program to be executed on the data transmitting/receiving unit (50) is available on the data transmitting/ receiving unit.

16. System according to claim 15, **characterized in that** the server (21) comprises a remote data transmitting server (22).

17. System according to of claim 15 or 16, **characterized in that** the data transmitting/receiving unit (50) comprises an input unit and/or a GPS receiver.

18. System according to any one of claims 15 to 17, **characterized in that** the data transmitting/ receiving unit is a cellular telephone or a Personal Digital Assistant PDA.

19. System according to any one of claims 15 to 18, **characterized in that** the vehicle (10) comprises a GPS receiver (26), a camera (30) installed in the vehicle, a control unit (23) for controlling the processing of the command, and/or a memory (24).

## Patentansprüche

1. Verfahren zum Fernsteuern eines Fahrzeugs (10), welches die folgenden Schritte umfasst:
- Verbinden einer Datenübertragungs-/Empfangseinheit (50) mit einem entfernten Fahrzeug (10) durch Verwendung einer drahtlosen Kommunikation,
- Übertragen eines Befehls zu einer Verarbeitungseinheit (20), welche in dem Fahrzeug (10) angeordnet ist, über die Datenübertragungs-/Empfangseinheit (50),
- Verarbeiten des Befehls durch die Verarbeitungseinheit (20), welche in dem Fahrzeug (10) angeordnet ist,
- Übertragen des verarbeiteten Befehls zu der Datenübertragungs-/Empfangseinheit (50) über die Verarbeitungseinheit, und
- Informieren des Benutzers der Datenübertragungs-/Empfangseinheit (50) über den verarbeiteten Befehl durch die Datenübertragungs-/Empfangseinheit,
**dadurch gekennzeichnet, dass**
- der zu der Verarbeitungseinheit (20) übertragene Befehl den Befehl umfasst, eine auf der Datenübertragungs-/Empfangseinheit (50) auszuführende Programmdatei, welche auf einem in dem Fahrzeug vorgesehenen Server (21) enthalten ist, bereitzustellen,
- der Verarbeitungsschritt den Schritt eines Bereitstellens der Programmdatei umfasst,
- der Schritt eines Übertragens des verarbeiteten Befehls den Schritt eines Übertragens der bereitgestellten Programmdatei zu der Datenübertragungs-/Empfangseinheit (50) umfasst, und
- der Informationsschritt den Schritt eines Informierens des Benutzers umfasst, dass das auf der Datenübertragungs-/Empfangseinheit (50) auszuführende übertragene Programm auf der Datenübertragungs-/Empfangseinheit verfügbar ist.

2. Verfahren nach Anspruch 1, **dadurch gekennzeichnet, dass** die Verbindung zwischen dem entfernten Fahrzeug (10) und der Datenübertragungs-/Empfangseinheit (50) über Infrarot, Bluetooth, ein drahtloses LAN, GSM, GPRS und/oder UMTS aufgebaut ist.

3. Verfahren nach einem der vorhergehenden Ansprüche, **dadurch gekennzeichnet, dass** ein Benutzer der Datenübertragungs-/Empfangseinheit (50) den Befehl in die Datenübertragungs-/Empfangseinheit vor seiner Übertragung zu der Verarbeitungseinheit (20) eingibt.

4. Verfahren nach einem der vorhergehenden Ansprüche, **dadurch gekennzeichnet, dass** ein Autorisierungsschritt vor der Übertragung des Befehls zu der Verarbeitungseinheit (20) durch die Datenübertragungs-/Empfangseinheit (50) ausgeführt wird.

5. Verfahren nach Anspruch 4, **dadurch gekennzeichnet, dass** der Autorisierungsschritt durch die Verarbeitungseinheit (20) in dem Fahrzeug (10) gesteuert durch den Benutzer des Fahrzeugs eingeleitet wird.

6. Verfahren nach Anspruch 4, **dadurch gekennzeichnet, dass** der Autorisierungsschritt gesteuert durch den Benutzer der Datenübertragungs-/Empfangseinheit durch die Datenübertragungs-/Empfangseinheit (50) eingeleitet wird.

7. Verfahren nach einem der vorhergehenden Ansprüche, **dadurch gekennzeichnet, dass** die Datenübertragungs-/Empfangseinheit (50) mit einem entfernten Datenübertragungsserver (22) der Verarbeitungseinheit (20) verbunden ist.

8. Verfahren nach einem der vorhergehenden Ansprüche, **dadurch gekennzeichnet, dass** das Verarbeiten des Befehls den Schritt eines Startens der Bedieneinheit des Fahrzeugs umfasst.

9. Verfahren nach einem der vorhergehenden Ansprüche **dadurch gekennzeichnet, dass** der Verarbeitungsschritt die Ausführung eines Diagnoseprogramms zum Finden von Fehlern in der Funktion des Fahrzeugs umfasst.

10. Verfahren nach einem der vorhergehenden Ansprüche, **dadurch gekennzeichnet, dass** während des Verarbeitens des Befehls ein Diebstahlschutzprogramm ausgeführt wird, welches die Schritte umfasst:
- Abschalten des Motors des Fahrzeugs,
- Betätigen der Hupe des Fahrzeugs,
- Aufzeichnen der Positionsdaten des Fahrzeugs durch Verwenden eines GPS-Systems des Fahrzeugs,
- Betätigen der Warnblinkanlage des Fahrzeugs und/oder
- Betätigen einer Kamera (30), welche in dem Fahrzeug (10) installiert ist, und Aufnehmen von Bildern des Insassenabteils des Fahrzeugs.

11. Verfahren nach einem der vorhergehenden Ansprüche, **dadurch gekennzeichnet, dass** das Ergebnis des verarbeiteten Befehls zu einer mobilen Datenübertragungs-/Empfangseinheit, wie einem Mobiltelefon oder einem persönlichen digitalen Assistenten PDA, übertragen wird.

12. Verfahren nach einem der Ansprüche 1 bis 10, **dadurch gekennzeichnet, dass** das Ergebnis des verarbeiteten Befehls zu einem nicht-mobilen Computersystem übertragen wird.

13. Verfahren nach einem der vorhergehenden Ansprüche, **dadurch gekennzeichnet, dass** der Benutzer der Datenübertragungs-/Empfangseinheit (50) die auszuführenden Programmdateien, welche in der Verarbeitungseinheit (20) des Fahrzeugs gespeichert sind, mittels einer Eingabeeinheit der Datenübertragungs-/Empfangseinheit (50) auswählt.

14. Verfahren nach einem der vorhergehenden Ansprüche, **dadurch gekennzeichnet, dass** der Befehl mittels eines TCP/IP-Protokolls zu der Verarbeitungseinheit in dem Fahrzeug übertragen wird.

15. System zum Fernsteuern eines Fahrzeugs (10), umfassend
- eine Datenübertragungs-/Empfangseinheit (50), welche über eine drahtlose Verbindung mit einem entfernten Fahrzeug verbunden ist,
- eine Verarbeitungseinheit (20), welche in dem Fahrzeug angebracht ist,
wobei die Datenübertragungs-/Empfangseinheit (50) einen Befehl zu der Verarbeitungseinheit in dem Fahrzeug überträgt, wobei die Verarbeitungseinheit (20) den Befehl verarbeitet und den verarbeiteten Befehl zu der Datenübertragungs-/Empfangseinheit überträgt, welche den Benutzer der Datenübertragungs-/Empfangseinheit (50) über den verarbeiteten Befehl informiert,
**dadurch gekennzeichnet, dass**
ein Server (21) in dem Fahrzeug vorgesehen ist, welcher eine auf der Datenübertragungs-/Empfangseinheit (50) auszuführende Programmdatei bereitstellt, wobei die bereitgestellte Programmdatei zu der Datenübertragungs-/Empfangseinheit übertragen wird, wobei die Datenübertragungs-/Empfangseinheit eine Anzeige umfasst, welche den Benutzer informiert, dass das auf der Datenübertragungs-/Empfangseinheit (50) auszuführende übertragene Programm auf der Datenübertragungs-/Empfangseinheit verfügbar ist.

16. System nach Anspruch 15, **dadurch gekennzeichnet, dass** der Server (21) einen entfernten Datenübertragungsserver (22) umfasst.

17. System nach Anspruch 15 oder 16, **dadurch gekennzeichnet, dass** die Datenübertragungs-/Empfangseinheit (50) eine Eingabeeinheit und/oder einen GPS-Empfänger umfasst.

18. System nach einem der Ansprüche 15 bis 17, **dadurch gekennzeichnet, dass** die Datenübertragungs-/Empfangseinheit ein Mobiltelefon oder ein persönlicher digitaler Assistent PDA ist.

19. System nach einem der Ansprüche 15 bis 18, **dadurch gekennzeichnet, dass** das Fahrzeug (10) einen GPS-Empfänger (26), eine in dem Fahrzeug installierte Kamera (30), eine Steuereinheit (23) zum Steuern der Verarbeitung des Befehls und/oder einen Speicher (24) umfasst.

## Revendications

1. Procédé de commande à distance d'un véhicule (10) comprenant les étapes suivantes consistant à :
- connecter une unité de transmission / réception de données (50) à un véhicule distant (10) en utilisant une liaison sans fil,
- transmettre une instruction de commande à une unité de traitement (20) disposée à l'intérieur du véhicule (10) par le biais de l'unité de transmission / réception de données (50),
- traiter l'instruction de commande par l'unité de traitement (20) disposée à l'intérieur du véhicule (10),
- transmettre l'instruction de commande traitée à l'unité de transmission / réception de données (50) par le biais de l'unité de traitement, et
- informer l'utilisateur de l'unité de transmission / réception de données (50) de l'instruction de commande traitée par le biais de l'unité de transmission / réception de données,
**caractérisé en ce que** :
- l'instruction de commande transmise à l'unité de traitement (20) comprend l'instruction de commande nécessaire pour amener un fichier de programmation contenu dans un serveur (21) disposé à l'intérieur du véhicule d'être exécuté sur l'unité de transmission / réception de données (50),
- l'étape de traitement comprend l'étape consistant à fournir le fichier de programmation ;
- l'étape de transmission de l'instruction de commande traitée comprend l'étape consistant à transmettre le fichier de programmation fourni à l'unité de transmission / réception de données (50), et
- l'étape d'information comprend l'étape consistant à informer l'utilisateur que le programme transmis qui doit être exécuté sur l'unité de transmission / réception de données (50) est disponible sur l'unité de transmission / réception de données.

2. Procédé selon la revendication 1, **caractérisé en ce que** la connexion entre le véhicule distant (10) et l'unité de transmission / réception de données (50) est établie par une liaison infrarouge, Bluetooth, LAN sans fil, GSM, GPRS et / ou UMTS.

3. Procédé selon l'une quelconque des revendications précédentes, **caractérisé en ce que** un utilisateur de l'unité de transmission / réception de données (50) entre l'instruction de commande dans l'unité de transmission / réception de données avant sa transmission à l'unité de traitement (20).

4. Procédé selon l'une quelconque des revendications précédentes, **caractérisé en ce que** une étape d'autorisation est exécutée avant la transmission de l'instruction de commande à l'unité de traitement (20) par l'unité de transmission / réception de données (50).

5. Procédé selon la revendication 4, **caractérisé en ce que** l'étape d'autorisation est initiée par l'unité de traitement (20) disposée à l'intérieur du véhicule (10) contrôlée par l'utilisateur du véhicule.

6. Procédé selon la revendication 4, **caractérisé en ce que** l'étape d'autorisation est initiée par l'unité de transmission / réception de données (50) contrôlée par l'utilisateur de l'unité de transmission / réception de données.

7. Procédé selon l'une quelconque des revendications précédentes, **caractérisé en ce que** l'unité de transmission / réception de données (50) est connectée à un serveur de transmission de données distant (22) de l'unité de traitement (20).

8. Procédé selon l'une quelconque des revendications précédentes, **caractérisé en ce que** le traitement de l'instruction de commande comprend l'étape consistant à faire démarrer l'unité principale du véhicule.

9. Procédé selon l'une quelconque des revendications précédentes, **caractérisé en ce que** l'étape de traitement comprend l'exécution d'un programme de diagnostic destiné à permettre de découvrir des erreurs dans le fonctionnement du véhicule.

10. Procédé selon l'une quelconque des revendications précédentes, **caractérisé en ce que**, au cours du traitement de l'instruction de commande, un programme antivol est exécuté, qui comprend les étapes consistant à :
- couper le moteur du véhicule,
- activer l'avertisseur sonore du véhicule,
- enregistrer les données de position du véhicule en utilisant un système GPS du véhicule,
- activer les feux de détresse du véhicule et / ou
- activer une caméra (30) installée à l'intérieur du véhicule (10) et prendre des photos du compartiment passager du véhicule.

11. Procédé selon l'une quelconque des revendications précédentes, **caractérisé en ce que** le résultat de l'instruction de commande traitée est transmis à une unité de transmission / réception de données mobile semblable, par exemple, à un téléphone cellulaire ou à un assistant numérique personnel - PDA.

12. Procédé selon l'une quelconque des revendications 1 à 10, **caractérisé en ce que** le résultat de l'instruction de commande traitée est transmis à un système informatique non mobile.

13. Procédé selon l'une quelconque des revendications précédentes, **caractérisé en ce que** l'utilisateur de l'unité de transmission / réception de données (50) choisit les fichiers de programmation à exécuter qui sont contenus dans l'unité de traitement (20) du véhicule au moyen d'une unité d'entrée de l'unité de transmission / réception de données.

14. Procédé selon l'une quelconque des revendications précédentes, **caractérisé en ce que** l'instruction de commande est transmise à l'unité de traitement disposée à l'intérieur du véhicule au moyen d'un protocole TCP/IP.

15. Système de commande à distance d'un véhicule (10) comprenant :
- une unité de transmission / réception de données (50) connectée à un véhicule distant (10) au moyen d'une liaison sans fil,
- une unité de traitement (20) disposée à l'intérieur du véhicule,
dans lequel l'unité de transmission / réception de données (50) transmet une instruction de commande à l'unité de traitement disposée à l'intérieur du véhicule, l'unité de traitement (20) traitant l'instruction de commande et transmettant l'instruction de commande traitée à l'unité de transmission / réception de données qui informe l'utilisateur de l'unité de transmission / réception de données (50) de l'instruction de commande traitée,
**caractérisé en ce que** :
un serveur (21) est disposé à l'intérieur du véhicule qui contient un fichier de programmation à exécuter sur l'unité de transmission / réception de données (50), dans lequel le fichier de programmation fourni est transmis à l'unité de transmission / réception de données, dans lequel l'unité de transmission / réception de données comprend un dispositif d'affichage qui informe l'utilisateur que le programme transmis destiné à être exécuté sur l'unité de transmission / réception de données (50) est disponible sur l'unité de transmission / réception de données.

16. Système selon la revendication 15, **caractérisé en ce que** le serveur (21) comprend un serveur de transmission de données distant (22).

17. Système selon la revendication 15 ou 16, **caractérisé en ce que** l'unité de transmission / réception de données (50) comprend une unité d'entrée et / ou un récepteur GPS.

18. Système selon l'une quelconque des revendications 15 à 17, **caractérisé en ce que** l'unité de transmission / réception de données (50) est un téléphone cellulaire ou un assistant numérique personnel - PDA.

19. Système selon l'une quelconque des revendications 15 à 18, **caractérisé en ce que** le véhicule (10) comprend un récepteur GPS (26), une caméra (30) installée à l'intérieur du véhicule, une unité de commande (23) pour commander le traitement de l'instruction de commande, et / ou une mémoire (24).
